# EUROPÄISCHE PATENTSCHRIFT

(11) **EP 2 572 081 B1**
(45) Veröffentlichungstag und Bekanntmachung des Hinweises auf die Patenterteilung: **03.08.2016**
(21) Anmeldenummer: 11724534.0
(22) Anmeldetag: 10.05.2011
(51) Int. Cl.: F01M 11/04, F16B 35/04

(54) **ABDICHTSCHRAUBE MIT VERKÜRZTEM KONUSABSCHNITT**
SEALING SCREW WITH REDUCED TAPERED ZONE
VIS ETAINCHE AVEC PARTIE CONIQUE REDUITE

(30) Priorität: 10.05.2010 DE 102010020078
(43) Veröffentlichungstag der Anmeldung: 27.03.2013
(73) Patentinhaber: Hommel, Günter, 34560 Fritzlar (DE)
(72) Erfinder: Hommel, Günter, 34560 Fritzlar (DE)
(74) Vertreter: Schneider, Peter Christian
(86) Internationale Anmeldenummer: PCT/EP2011/002326
(87) Internationale Veröffentlichungsnummer: WO 2011/141163

(56) Entgegenhaltungen:
- WO-A1-03/106850
- US-A- 3 680 429
- US-A- 3 849 964
- US-A- 5 176 215

## Beschreibung

### Gebiet der Erfindung

Die vorliegende Erfindung betrifft eine Gewindeschraube, enthaltend einen Schaft, der mit einem zum Eindrehen in ein Gegengewinde geeigneten Gewinde versehen ist, und einen Schraubenkopf, der zur Auflage über einem mit einer Fase versehenen Loch eingerichtet ist.

Die Erfindung betrifft weiterhin ein Verfahren zur Herstellung einer Schraubverbindung zwischen wenigstens zwei Bauteilen, wobei das eine Bauteil ein gefastes (Fase) Durchgangsloch für den Schraubenschaft aufweist, und das Durchgangsloch mit dem Schraubenkopf abgedichtet werden soll.

### Stand der Technik

Gewindeschrauben sind vielfach bekannt. Sie werden zum Befestigen und miteinander Verspannen zweier (oder mehrerer) Werkstücke verwendet, wobei das eine ein Durchgangsloch und das andere ein Loch mit einem Gegengewinde aufweist, oder auch zum Verschließen von Öffnungen, wie im Fall einer Ölablassschraube.

Das Anziehen einer Schraubverbindung bewirkt das Aufbringen einer axialen Normalkraft infolge geringer elastischer Verformung des Schaftes und des Werkstücks. Der Schraübenschaft wird dadurch im elastischen Bereich gedehnt, die verspannten Werkstücke im Bohrungsbereich gestaucht. Die Verbindung selbst ist dadurch kraftschlüssig und besitzt Eigenschaften einer Feder.

Vielfach ist es gewünscht, mit einer Schraube auch das Loch, in das sie hineingesteckt wird, flüssigkeitsdicht oder gasdicht abzudichten. Hierzu gibt es im Stand der Technik verschiedene Vorschläge, unter anderem eine Schraube, die die Abdichtung ohne zwischengelegte Beilagscheibe aus flexiblem weichen Material schaffen kann. Diese Schraube ist veröffentlicht in der Patentschrift DE 103 14 948.

Diese Schraube erfüllt beide an sie gestellten Aufgaben für viele Anwendungsfälle, insbesondere bei Gussteilen mit rauer und Unebenheiten behafteten Auflageflächen für den Schraubenkopf, wie sie typisch sind bei Gussteilen der Kfz-Industrie, etwa bei Getriebegehäusen, Kurbelwellengehäusen und Motorgehäusen, nämlich das stabile und sichere Verbinden der Bauteile trotz deren Vibration, und deren thermisch bedingten Dehn- und Schrumpfprozessen, und auch die Abdichtung des Durchgangsloches.

Die Schraube kann jedoch nur bedingt eingesetzt werden. Wenn das Loch, in das die Schraube gesteckt wird, eine Fase besitzt, sind die Anforderungen bzgl. Stabilität der Schraubverbindung nicht immer einzuhalten, etwa bei Fasenwinkeln von ca. 45° und größer, relativ zur Lochachse.

Die obige Schraube ist weiter aus der US 3 849 964 A als eine Gewindeschraube bekannt, die einen Schaft aufweist, der mit einem zum Eindrehen in ein Gegengewinde geeigneten Gewinde versehen ist und einen Schraubenkopf aufweist, der zur Auflage über einen mit einer Fase versehenen Loch eingerichtet ist.

Nachteilig dabei ist, dass der Schraubenkopf selbst einen an seine Stirnfläche anschließenden steilen Konusabschnitt, d.h. einen sich zum Schaft hin verjüngenden ersten Abschnitt und einen sich daran anschließenden flacher verlaufenden Übergangsabschnitt, d.h. einen sich stärker verjüngenden zweiten Abschnitt aufweist.

Weiterhin nachteilig dabei ist, dass die Gewindeschraube eine Art Senkkopf aufweist, der mit der Senkung durch ein Schläge auf den Senkkopf ausübendes Schlagelement in einen dichten Eingriff gebracht wird. Entsprechend ist der Schraubenkopf nicht für eine definierte Auflage im Sinne eines Anschlages über einen mit einer Fase versehenem Loch eingerichtet.

Die Aufgabe der vorliegenden Erfindung besteht daher darin, die vorgenannte Schraube weiterzubilden oder eine Alternative zu schaffen, mit der sie auch für angefaste Löcher ohne Schlagelement verwendet werden kann.

### Vorteile der Erfindung

Die Aufgabe bezüglich der Schraube wird in Verbindung mit dem Oberbegriff des Anspruches 1 dadurch gelöst, dass der Schaft zwischen Schraubenkopf und dem Gewinde einen steil verlaufenden Konusabschnitt aufweist, und einen im Verhältnis zu diesem flacher verlaufenden Übergangsabschnitt zu dem im Weiteren zylindrisch verlaufenden Schaft aufweist, und dass der Winkel α des steil verlaufenden Konusabschnitts zur Schraubenachse im Bereich von 5° bis (β minus 2°) ist, und β der Winkel der Fase zur Lochachse ist, dass die entlang des Konus gemessene Konuslänge des steil verlaufenden Konusabschnitts immerhin so lang ist, dass die Konusfläche mit der Fasenfläche in Kontakt gelangt, und dass das Material der Schraube härter ist als das der Kontaktfläche.

Die Aufgabe bezüglich des Verfahrens wird in Verbindung mit dem Oberbegriff des Anspruches 1 dadurch gelöst, dass folgende Schritte durchgeführt werden:
a) Einstecken einer Schraube nach Anspruch 1 in das Durchgangsloch,
b) Eindrehen der Schraube in das Gegengewinde, wobei zunächst nur der einer von beiden Konusabschnitten, bevorzugt der steilere gegen den Übergangsbereich der Fase zum zylindrischen Lochabschnitt gedrückt wird, dieser dadurch verformt wird, wodurch sich eine Dichtfläche zwischen Konusabschnitt der Schraube und Übergangsbereich am Loch ausbildet,
c) weiteres Eindrehen der Schraube solange bis der Schraubenkopf eine Kraft auf seine Auflagefläche ausübt, die groß genug ist, um Losdrehen der Schraube durch Vibration, oder thermisch bedingte Ausdehnungs- und Schrumpfbewegungen zu verhindern, bzw., oder die vorgegebene Spannung zwischen Schraubenkopf und Auflagefläche erreicht ist.

Aus den jeweiligen Unteransprüchen ergeben sich weitere vorteilhafte Merkmale.

Einem wesentlichen Aspekt der Erfindung folgend wird eine Gewindeschraube offenbart, enthaltend einen Schaft, der mit einem zum Eindrehen in ein Gegengewinde geeigneten Gewinde versehen ist, und einen Schraubenkopf, der zur Auflage über einem mit einer Fase versehenen Loch eingerichtet ist, und die gekennzeichnet ist dadurch, dass der Schaft zwischen Schraubenkopf und dem Gewinde, vorzugsweise direkt an den Schraubenkopf angrenzend, einen steil verlaufenden Konusabschnitt aufweist, und einen im Verhältnis zu diesem flacher verlaufenden Übergangsabschnitt zum - im Weiteren zylindrisch verlaufenden - Schaft aufweist.

Beim Eindrehen der Schraube wird zunächst der Konusabschnitt gegen den Übergangsbereich der Fase zum zylindrischen Lochabschnitt gedrückt, dieser dadurch verformt, wodurch sich eine Dichtfläche zwischen Konusabschnitt der Schraube und dem Übergangsbereich am Loch ausbildet, und wobei der Schraubenkopf beim weiteren Eindrehen der Schraube im Gegensatz zum beschriebenen Stand der Technik reproduzierbar zur Auflage gelangt und beim weiteren Eindrehen der Schraubenkopf eine Kraft auf seine Auflagefläche ausübt, die groß genug ist, um eine ausreichend große Spannung zwischen den Bauteilen, bzw. zwischen Schraube und Bauteil zu erzeugen, sowie ein Losdrehen der Schraube durch Vibration, oder thermisch bedingte Ausdehnungs- und Schrumpfbewegungen verlässlich zu verhindern.

Winkel werden hierin immer angegeben in Bezug auf die Senkrechte, sei es Lochachse oder Schraubenachse.

Es ist vorteilhaft, wenn der Winkel α des steil verlaufenden Konusabschnitts zur Schraubenachse im Bereich von 5° bis (β minus 2°) ist, und β der Winkel der Fase zur Lochachse ist, bei einer Konuslänge im Bereich von 1,0 mm bis 2,0 mm, und einer Differenz zwischen Lochdurchmesser und Schraubendurchmesser von etwa 0,6 mm.

Noch vorteilhafter ist es, wenn der Bereich für α von 25° bis 40° beträgt, noch mehr bevorzugt von 30° bis 38° beträgt, und noch mehr bevorzugt von 32° bis 36° beträgt.

Bei allen genannten Winkelbereichen muss die Konuslänge immerhin so lang sein, dass sie mit der Fasenfläche und bevorzugt mit deren besagtem Übergangsbereich zum zylindrischen Rest des Durchgangslochs in Kontakt gelangt und beim weiteren Eindrehen diesen zwecks Ausbildung der Dichtfläche verformt. Dabei wird vorausgesetzt, dass das Material der Schraube härter ist als das des Bauteils bzw. der Kontaktfläche, wenn das Bauteil nicht aus einem homogenen Material aufgebaut sein sollte. Die Konusfläche darf aber nicht zu lang, der Konusabschnitt mit seinem maximalen Durchmesser nicht zu groß sein und das Spiel zwischen Schraube und Durchgangsloch nicht zu gering sein, denn sonst schafft man es nicht, die Schraube so weit einzudrehen, dass der Schraubenkopf zur Auflage an seinen vorgesehen Auflagefläche gelangt und die je nach Anwendungsfall erforderliche Spannung zwischen den Bauteilen und zwischen Schraubenkopf und angrenzendem Bauteil reproduzierbar zu erzeugen. Die untenstehenden Beispiele geben dafür den Rahmen an, innerhalb dessen dies im Allgemeinen erreichbar ist.

Wenn zwischen Schraubenkopf und steilem Konusabschnitt eine ringförmig umlaufende Hohlkehle vorgesehen ist, dann wird dadurch beim Festdrehen der Schraube vor allem der Lochrand verformt, dabei die geforderte Dichtheit erzeugt, und ein entsprechend der Verformung seitlich und nach oben entstehender Wulst findet Platz im Inneren der Hohlkehle. Die Schraube kann dann immer hoch mit dem Schraubenkopf nach den speziellen Vorgäben des jeweiligen Anwendungsfalles festgezogen werden, wobei auch die zu erreichende Spannung zwischen Schraubenkopf und dessen Auflagefläche realisiert werden kann. Somit kann die Schraube zumindest in manchen Fällen auch verwendet werden, wenn ein Loch einmal keine Fase oder nur eine ungenügend groß ausgeprägte Fase aufweist.

Einem wesentlichen Verfahrensaspekt der Erfindung folgend wird ein Verfahren zur Herstellung einer Schraubverbindung zwischen wenigstens zwei Bauteilen offenbart, wobei das eine Bauteil ein gefastes (Fase) Durchgangsloch für den Schraubenschaft aufweist, und das Durchgangsloch mit dem Schraubenkopf abgedichtet werden soll, gekennzeichnet durch die Schritte:
a) Einstecken einer Schraube nach Anspruch 1 in das Durchgangsloch,
b) Eindrehen der Schraube in das Gegengewinde, wobei zunächst nur der Konusabschnitt gegen den Übergangsbereich der Fase zum zylindrischen Lochabschnitt gedrückt wird, dieser dadurch verformt wird, wodurch sich eine Dichtfläche zwischen Konusabschnitt der Schraube und Übergangsbereich am Loch ausbildet,
c) weiteres Eindrehen der Schraube solange bis der Schraubenkopf eine Kraft auf seine Auflagefläche ausübt, die groß genug ist, um Losdrehen der Schraube durch Vibration, oder thermisch bedingte Ausdehnungs- und Schrumpfbewegungen zu verhindern, bzw. bis die notwendige Spannung zwischen den Bauteilen oder zwischen Schraubenkopf und angrenzendem Bauteil geschaffen ist.

Die erfindungsgemäße Schraube kann besonders vorteilhaft zur Verbindung von Bauteilen von Gehäusen verwendet werden, die im Inneren ein Flüssigkeit oder ein unter Überdruck stehendes Gas aufweisen, und deren Dichtheit durch andere Maßnahmen wie aufwändige Tauchbäder aufrechterhalten werden muss, wie beispielsweise bei Getriebegehäusen, Kurbelwellengehäusen und Motorgehäusen. Hier gibt es im Besonderen fast ausschließlich Undichtigkeiten im Bereich der Sacklöcher und der Durchgangslöcher, die ihrerseits bedingt sind durch Risse, die sich nach einem Gießvorgang für das Bauteil durch das Erkalten des Materials bilden.

Die erfindungsgemäße Schraube ist für alle Schraubengrößen und dazu passenden Durchgangslochgrößen einsetzbar.

### Kurzbeschreibung der Figuren

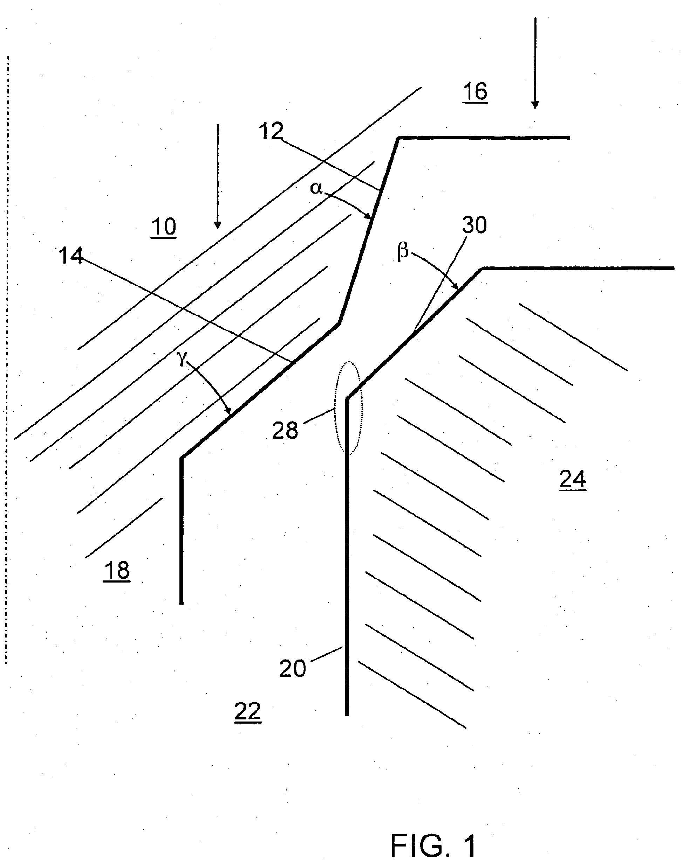

Figur 1 zeigt in vergrößerter schematischer Teilansicht links und oben eine erfindungsgemäße Schraube mit steilerem Konusabschnitt und flacherem Konusabschnitt, sowie in Teilen den Schraubenkopf und den Schraubenschaft sowie rechts und unten dazu den rechtsseitigen Lochrand des Durchgangslochs eines Bauteils, wobei Konusabschnitt der Schraube und der Übergangsbereich zwischen Fase und angrenzendem zylindrisch verlaufenden Loch noch keinen Kontakt besitzen.

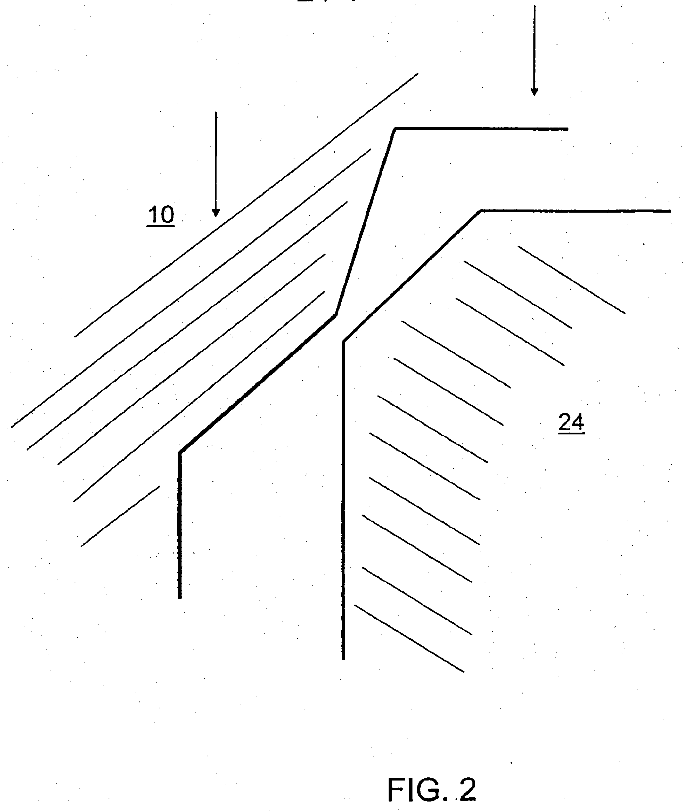

Figur 2 ist eine Darstellung gemäß Figur 1, wobei sich die Schraube der zu erwartenden Kontaktstelle bereits durch das Eindrehen angenähert hat, aber immer noch kein Kontakt erfolgt ist.

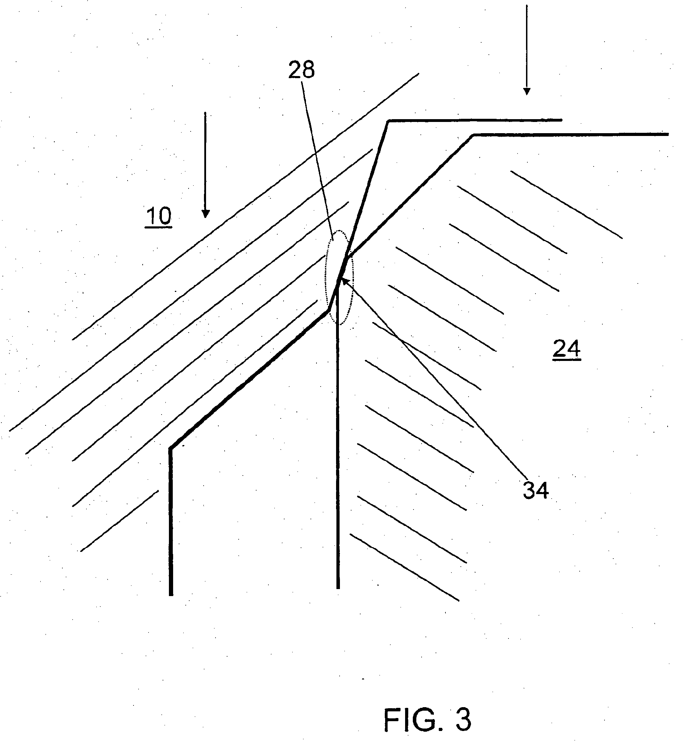

Figur 3 ist eine Darstellung gemäß Figur 1 und 2, wobei die Schraube mit ihrem Konusabschnitt den Übergangsbereich der Fase zum zylindrischen Teil des Loches in einem kleinen Verformungsabschnitt verformt hat, der Schraubenkopf selbst aber noch keinen Kontakt zu seiner Auflagefläche besitzt.

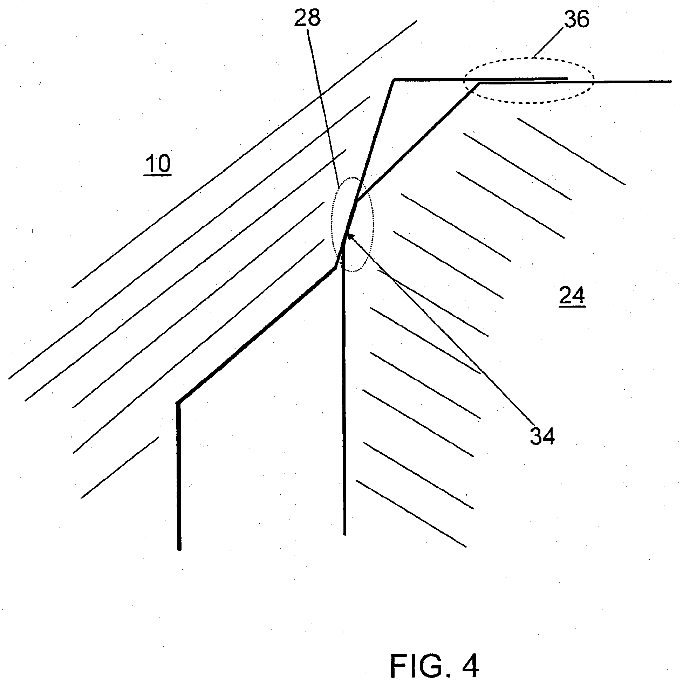

Figur 4 ist eine Darstellung gemäß Figur 1, 2 und 3, wobei der Schraubenkopf nunmehr mit seinem Solldrehmoment angezogen worden ist, und der Verformungsabschnitt noch größer geworden ist, und wobei die geforderte Spanung zwischen Schraubenkopf und seiner Auflagefläche sowie die Spannung zwischen dem Bauteil mit dem Durchgangsloch und dem damit zu verbindenden zweiten Bauteil mit dem Gegengewinde erreicht ist.

### Ausführungsbeispiele:

Das Material der Bauteile sei eine übliche Aluminiumlegierung, oder eine Legierung überwiegend aus Aluminium und Magnesium, wie bei Getriebegehäusen, Kurbelwellengehäusen oder Motorgehäusen üblich. Die Schraube sei als für diese Anwendung übliche Stahlschraube und als DIN-Schraube der Größe M8 ausgeführt.

Figur 1 zeigt in vergrößerter schematischer Teilansicht links und oben eine erfindungsgemäße Schraube 10 mit steilerem Konusabschnitt 12 und flacherem Konusabschnitt 14, sowie in Teilen den Schraubenkopf 16 und den Schraubenschaft 18, sowie rechts und unten dazu den rechtsseitigen Lochrand 20 des Durchgangslochs 22 eines Bauteils 24, zum Beispiel eine Getriebegehäuses, wobei der steilere Konusabschnitt 12 der Schraube und der Übergangsbereich 28 zwischen Fase 30 und angrenzendem zylindrisch verlaufenden Lochrand 20 noch keinen Kontakt besitzen.

Winkel werden hierin immer angegeben in Bezug auf die Senkrechte, sei es eine Parallele zur Lochachse oder zur Schraubenachse, die nur schematisch in Figur 1 an deren linkem Rand gezeichnet ist. Der Lochdurchmesser des ungefasten Lochabschnitts beträgt 8,6 mm, das heißt, die Schraube hat nach beiden Seiten ein Spiel von etwa 0,3 mm. Der Fasenwinkel α beträgt 45°, der Winkel β des steileren Konusabschnitts 12 beträgt ca. 25°, der Winkel γ des flacheren Konusabschnitts 14 etwa 45°.

Die Länge des steileren Konusabschnitts entlang des Konus gemessen beträgt ca, 1,3 mm. Der Durchmesser des steileren Konusabschnitts beträgt angrenzend zum Schraubenkopf etwa 9,3 bis 9,4 mm, woraus sich eine "Überdeckung" des Loches auf beiden Seiten oder radial gesehen von (9,4 mm - 8,6 mm)/2 = 0,4 mm ergibt.

Die Schraube 10 soll nun in das nicht dargestellte Gegengewinde eingedreht werden, um die Schraubverbindung herzustellen. Die weiteren Figuren 2, 3 und 4 zeigen dies jeweils weiter hineingedreht.

Figur 2 ist eine Darstellung gemäß Figur 1, wobei sich die Schraube 10 der zu erwartenden Kontaktstelle bereits durch das erste Eindrehen angenähert hat, aber immer noch kein Kontakt erfolgt ist.

Figur 3 ist eine Darstellung gemäß Figur 1 und 2, wobei die Schraube 10 mit ihrem steilerem Konusabschnitt 12 den Übergangsbereich 28 der Faste 30 zum zylindrischen Teil des Loches in einem kleinen Verformungsabschnitt 34 verformt hat, der Schraubenkopf selbst aber noch keinen Kontakt zu seiner Auflagefläche besitzt.

Figur 4 ist eine Darstellung gemäß Figur 1, 2 und 3, wobei der Schraubenkopf nunmehr mit seinem Solldrehmoment angezogen worden ist, und der Verformungsabschnitt 34 noch größer geworden ist, und wobei die geforderte Spannung wischen Schraubenkopf und seiner Auflagefläche (siehe strichlierte Zone 36 oben rechts) sowie die Spannung zwischen dem Bauteil mit dem Durchgangsloch und dem damit zu verbindenden zweiten Bauteil mit dem Gegengewinde erreicht ist. Da der Konusabschnitt 12 genügend glatt ist und auch die Fläche der Fase 11 genügend glatt ist, und die Verformung nur eintritt, wenn der Kontakt zwischen Konusabschnitt und Fasenfläche mit ausreichend großem Druck erfolgt, bildet die verformte Fläche erfindungsgemäß eine Dichtfläche aus, die technisch gesehen ursächlich ist für die verlangte Abdichtfunktion. Dies kann geschehen ohne Zwischenlegung eines wie auch immer gearteten Dichtrings. Gleichwohl kann zwischen Schraubenkopf und Auflagefläche ein Dichtring, eine Beilagscheibe, ein Sprengring oder dergleichen eingefügt werden, ohne dass das Funktionieren des erfindungsgemäßen Prinzips gefährdet ist.

Weitere Ausführungsbeispiele bezüglich einer Stahlschraube M8 für ein Eindrehen in eine übliche Aluminiumlegierung wie sie bei den oben genannten Gehäusen im Automobilbau verwendet werden, mit einem radialen Spiel von 0,3 mm sind wie folgt:
2)
   Der Fasenwinkel α beträgt 45°, der Winkel β des steileren Konusabschnitts 12 beträgt ca. 30°, der Winkel γ des flacheren Konusabschnitts 14 etwa 45°. Die Länge des steileren Konusabschnitts entlang des Konus gemessen beträgt ca. 1,3 mm. Der Durchmesser des steileren Konusabschnitts beträgt angrenzend zum Schraubenkopf etwa 9,3 bis 9,4 mm, woraus sich eine "Überdeckung" des Loches auf beiden Seiten oder radial gesehen von (9,4 mm - 8,6 mm)/2 = 0,4mm ergibt.
3)
   Der Fasenwinkel α beträgt 45°, der Winkel β des steileren Konusabschnitts 12 beträgt ca. 33°, der Winkel γ des flacheren Konusabschnitts 14 etwa 45°. Die Länge des steileren Konusabschnitts entlang des Konus gemessen beträgt ca. 1,3 mm. Der Durchmesser des steileren Konusabschnitts beträgt angrenzend zum Schraubenkopf etwa 9,3 bis 9,4mm, woraus sich eine "Überdeckung" des Loches auf beiden Seiten oder radial gesehen von (9,4 mm - 8,6 mm)/2 = 0,4 mm ergibt.
4)
   Der Fasenwinkel α beträgt 45°, der Winkel β des steileren Konusabschnitts 12 beträgt ca. 35°, der Winkel γ des flacheren Konusabschnitts 14 etwa 45°. Die Länge des steileren Konusabschnitts entlang des Konus gemessen beträgt ca. 1,3 mm. Der Durchmesser des steileren Konusabschnitts beträgt angrenzend zum Schraubenkopf etwa 9,3 bis 9,4 mm, woraus sich eine "Überdeckung" des Loches auf beiden Seiten oder radial gesehen von (9,4 mm - 8,6 mm)/2 = 0,4 mm ergibt.
5)
   Der Fasenwinkel α beträgt 45°, der Winkel β des steileren Konusabschnitts 12 beträgt ca. 38°, der Winkel γ des flacheren Konusabschnitts 14 etwa 45°. Die Länge des stellern Konusabschnitts entlang des Konus gemessen beträgt ca. 1,4 bis 1,8 mm. Der Durchmesser des steileren Konusabschnitts beträgt angrenzend zum Schraubenkopf etwa 9,3 bis 9,4 mm, woraus sich eine "Überdeckung" des Loches auf beiden Seiten oder radial gesehen von (9,4 mm - 8,6 mm)/2 = 0,4mm ergibt.
6)
   Der Fasenwinkel α beträgt 45°, der Winkel β des steileren Konusabschnitts 12 beträgt ca. 40°, der Winkel γ des flacheren Konusabschnitts 14 etwa 45°. Die Länge des steileren Konusabschnitts entlang des Konus gemessen beträgt ca. 1,5 mm. Der Durchmesser des steileren Konusabschnitts beträgt angrenzend zum Schraubenkopf etwa 9,3 bis 9,4 mm, woraus sich eine "Überdeckung" des Loches auf beiden Seiten oder radial gesehen von (9,4 mm - 8,6 mm)/2 = 0,4 mm ergibt.
7)
   Der Fasenwinkel α beträgt 45°, der Winkel β des steileren Konusabschnitts 12 beträgt nur ca. 10°, der Winkel γ des flacheren Konusabschnitts 14 etwa 45°. Die Länge des steileren Konusabschnitts entlang des Konus gemessen beträgt ca. 1,3 mm. Der Durchmesser des steileren Konusabschnitts beträgt angrenzend zum Schraubenkopf etwa 9,3 bis 9,4 mm, woraus sich eine "Überdeckung" des Loches auf beiden Seiten oder radial gesehen von (9,4 mm - 8,6 mm)/2 = 0,4 mm ergibt.

Wie aus den Beispielen im Zusammenhang mit den Figuren 1 bis 4 erkennbar ist, ist die Schraube auch mit mehr radialem Spiel einsetzbar, solange die Überdeckung durch den steileren Konusabschnitt vorhanden ist. Die senkrecht verlaufende Linie des Lochrandes würde weiter nach rechts versetzt. Der Verformungsbereich würde damit weiter nach oben verschoben werden, die Dichtfläche bliebe aber weiter gegeben, und der Schraubenkopf käme zu seiner gewünschten Auflage und könnte reproduzierbar Spannung auf die Bauteile erzeugen, weil erfindungsgemäß die Konuslänge des steileren Konusabschnitts deutlich verkürzt ist im Vergleich zum Stand der Technik.

Bei geringerem radialen Spiel muss der das Material des Bauteils verdrängende Konusabschnitt 12 bzw. 14 entsprechend mehr Material verdrängen. Dies geschieht dann gegebenenfalls zunächst mit dem flacheren Konusabschnitt 14 und erst im weiteren Verlauf des Eindrehens mit dem steileren Konusabschnitt 12. Hier sind die Grenzen der Schraubverbindung erreicht, wenn der Schraubenkopf abreißt, bevor der Schraubenkopf selbst die gewünschte Spannung erzeugt.

Die erfinderische Qualität besteht unter anderem darin, dass das radiale Spiel, der Überdeckungsbereich des steileren Konusabschnitts 12 und dessen Konuswinkel so angepasst sind, dass die geforderte Spannung zwischen Kopf und seiner Auflagefläche auch tatsächlich erzeugt werden kann, ohne dass bereits ein zu großer Teil des Anzugsdrehmoments (meist ein Sollmaß) für die Schraube zur Verformung des Materials und damit zur Herstellung der Dichtfläche weggenommen wird. Dies lässt sich prinzipiell mit einem steileren Konusabschnitt 12 erreichen, der steil genug ist. Hierzu geben die oben genannten Beispiel Anhaltspunkte, sie stellen jedoch keine erschöpfende Auswahl dar. Auch der Winkel des flacheren Konusabschnitts lässt sich variierten. Bevorzugt ist er um eine Winkeldifferenz von 10° bis 30° größer als der des steilen Konuswinkels und bevorzugt nicht wesentlich größer als der Winkel der Fase.

Der Übergang zwischen steilem und flacherem Konusabschnitt kann auch gerundet sein. Die Konuskontur muss auch nicht unbedingt linear verlaufen, sondern kann im gewissen Maße gekrümmt sein, solange das erfinderische Prinzip eingehalten wird, wie es oben beschrieben ist.

Sollen die beschriebenen Ausführungsbeispiele auf andere Schraubengrößen übertragen werden, so können die charakteristischen Größen wie Lochdurchmesser, Spiel, Schraubendurchmesser, Konuslängen, etc., in der Regel proportional angepasst werden.

Sollte eine gerundete Fase verwendet werden, so ist das erfinderische Prinzip ebenfalls anwendbar. Maßgeblich sind dann die Winkel der Fasenfläche im erwarteten Kontaktbereich.

## Patentansprüche

1. Gewindeschraube (10) enthaltend einen Schaft (18), der mit einem zum Eindrehen in ein Gegengewinde geeigneten Gewinde versehen ist, und einen Schraubenkopf (16), der zur Auflage über einem mit einer Fase (30) versehenen Loch (22) eingerichtet ist, wobei
der Schaft (18) zwischen Schraubenkopf (16) und dem Gewinde einen steil verlaufenden Konusabschnitt (12) aufweist, und einen im Verhältnis zu diesem flacher verlaufenden Übergangsabschnitt (14) zu dem im Weiteren zylindrisch verlaufenden Schaft aufweist, und dadürch gekennzeichnet, dass der Winkel α des steil verlaufenden Konusabschnitts (12) zur Schraubenachse im Bereich von 5° bis (β minus 2°) ist, und β der Winkel der Fase (30) zur Lochachse ist, und
dass die entlang des Konus gemessene Konuslänge des steil verlaufenden Konusabschnitts (12) immerhin so lang ist, dass die Konusfläche mit der Fasenfläche in Kontakt gelangt, und
dass das Material der Schraube (10) härter ist als das der Kontaktfläche.

2. Gewindeschraube nach Anspruch 1,
wobei der Winkel α des steil verlaufenden Konusabschnitts zur Schraubenachse im Bereich von 5° bis (β minus 2°) ist, und β der Winkel der Fase (30) zur Lochachse ist, bei einer Konuslänge im Bereich von 1,0 mm bis 2,0 mm, und einer Differenz zwischen Lochdurchmesser und Schraubendurchmesser von etwa 0,6 mm, bezogen auf eine Schraubengröße MB.

3. Gewindeschraube nach dem vorstehenden Anspruch, wobei der Bereich für α von 25° bis 40° ist, noch mehr bevorzugt von 30° bis 38°, und noch mehr bevorzugt von 32° bis 36° ist.

4. Gewindeschraube nach einem der vorstehenden Ansprüche,
wobei zwischen Schraubenkopf und steilem Konusabschnitt eine ringförmig umlaufende Kehle vorgesehen ist.

5. Verfahren zur Herstellung einer Schraubverbindung zwischen wenigstens zwei Bauteilen, wobei das eine Bauteil (24) ein gefastes (Fase (30)) Durchgangsloch (22) für den Schraubenschaft (18) aufweist, und das Durchgangsloch (22) mit dem Schraubenkopf (16) abgedichtet werden soll,
**dadurch gekennzeichnet,**
**dass** folgende Schritte durchgeführt werden:
a) Einstecken einer Schraube (10) nach Anspruch 1 in das Durchgangsloch (22),
b) Eindrehen der Schraube in das Gegengewinde, wobei zunächst nur der einer von beiden Konusabschnitten, bevorzugt der steilere ((12) gegen den Übergangsbereich (28) der Fase(30) zum zylindrischen Lochabschnitt (20) gedrückt wird, dieser dadurch verformt wird, wodurch sich eine Dichtfläche (34) zwischen Konusabschnitt der Schraube und Übergangsbereich am Loch ausbildet,
c) weiteres Eindrehen der Schraube solange bis der Schraubenkopf (16) eine Kraft auf seine Auflagefläche ausübt, die groß genug ist, um Losdrehen der Schraube durch Vibration, oder thermisch bedingte Ausdehnungs-und Schrumpfbewegungen zu verhindern, oder die vorgegebene Spannung zwischen Schraubenkopf (16) und Auflagefläche erreicht ist.

## Claims

1. A threaded screw (10) containing a shaft (18), which is provided with a suitable thread for screwing into a mating thread, and a screw head (16), which is designed for sitting upon a hole (22) provided with a bevel (30), where the shaft (18) comprises a conical section (12) extending steeply between the screw head (16) and the thread, and comprises a transitional section (14) that extends more shallowly relative to the shaft, which afterwards extends cylindrically, and **characterized in that**
the angle α of the steeply extending conical section (12) with the screw axis lies within the range of 5° to (ß minus 2°), and ß is the angle of the bevel (30) to the hole axis, and
that the cone length of the steeply extending conical section (12) measured along the cone is at least long enough for the cone surface to come into contact with the beveled surface, and
that the material of the screw (10) is harder than that of the contact surface.

2. The threaded screw according to claim 1,
where the angle α of the steeply extending conical section to the screw axis lies with the range of 5° to (ß minus 2°), and ß is the angle of the bevel (30) to the hole axis, at a cone length within a range of 1.0 mm to 2.0 mm, and a difference between hole diameter and screw diameter of approximately 0.6 mm, relative to an M8 screw size.

3. The threaded screw according to the preceding claim,
where the range for α is 25° to 40°, more preferably 30° to 38°, and even more preferably 32° to 36°.

4. The threaded screw according to any of the preceding claims,
where an annular peripheral gorge is provided between the screw head and the steep conical section.

5. A method for producing a screw connection between at least two components, where the one component (24) comprises a beveled (bevel (30)) through-hole (22) for the screw shaft (18), and the through-hole (22) is to be sealed with the screw head (16),
**characterized in that**
the following steps are performed:
a) inserting a screw (10) according to claim 1 into the through-hole (22),
b) screwing the screw into the mating thread, where initially only one of the two conical sections, preferably the steeper one (12), is pressed against the transition zone (28) of the bevel (30) to the cylindrical hole section (20), which is deformed as a result, whereby a sealing surface (34) is formed between the conical section of the screw and the transition zone on the hole,
c) further screwing in of the screw until the screw head (16) exerts a force onto its support surface that is great enough to prevent the screw from unscrewing through vibration or due to thermal expansion and contraction movements, or until the specified tension between the screw head (16) and the support surface is reached.

## Revendications

1. Vis filetée (10), comprenant une tige (18) qui est pourvue d'un filetage approprié pour être vissé dans un filetage complémentaire, et une tête de vis (16) qui est conçue pour reposer sur un trou (22) pourvu d'un chanfrein (30), sachant que la tige (18) présente, entre la tête de vis (16) et le filetage, une partie conique (12) à pente raide, et présente, vers la tige pour le reste cylindrique, une partie de transition (14) à pente moins raide par rapport à la partie conique,
**caractérisé en ce que** l'angle α, par rapport à l'axe de la vis, de la partie conique (12) à pente raide se situe dans la plage allant de 5° à (β moins 2°), β étant l'angle du chanfrein (30) par rapport à l'axe du trou,
et **en ce que** la longueur de cône, mesurée le long du cône, de la partie conique (12) à pente raide est cependant suffisante pour que la surface du cône entre en contact avec la surface du chanfrein, et **en ce que** le matériau de la vis (10) est plus dur que celui de la surface de contact.

2. Vis filetée selon la revendication 1,
sachant que l'angle α, par rapport à l'axe de la vis, de la partie conique à pente raide se situe dans la plage allant de 5° à (β moins 2°), β étant l'angle du chanfrein (30) par rapport à l'axe du trou, pour une longueur de cône dans la plage allant de 1,0 mm à 2,0 mm, et une différence entre le diamètre du trou et le diamètre de la vis d'environ 0,6 mm, relativement à une taille de vis M8.

3. Vis filetée selon la revendication précédente,
sachant que la plage pour α s'étend de 25° à 40°, d'une manière encore plus préférée de 30° à 38°, et encore plus préférée de 32° à 36°.

4. Vis filetée selon l'une des revendications précédentes,
sachant qu'une gorge annulairement entourante est prévue entre la tête de vis et la partie conique à pente raide.

5. Procédé de réalisation d'un assemblage vissé entre aux moins deux pièces, sachant qu'une pièce (24) présente un trou de passage (22) chanfreiné (chanfrein (30) pour la tige de vis (18), et que le trou de passage (22) doit être étanché par la tête de vis (16),
**caractérisé en ce qu'**on exécute les étapes suivantes :
a) insertion d'une vis (10) selon la revendication 1 dans le trou de passage (22),
b) vissage de la vis dans le filetage complémentaire, sachant qu'une seule des deux parties coniques, de préférence la plus raide (12), est d'abord pressée contre la région de transition (28) du chanfrein (30) vers la partie cylindrique (20) du trou et que cette région est ainsi déformée, de sorte qu'une surface d'étanchéité (34) se forme entre la partie conique de la vis et la région de transition du trou,
c) poursuite du vissage de la vis jusqu'à ce que la tête de vis (16) exerce sur sa surface d'appui une force suffisante pour empêcher le desserrage de la vis par des vibrations ou par des mouvements de dilatation et de retrait d'origine thermique, ou jusqu'à ce que la contrainte prédéfinie entre la tête de vis (16) et la surface d'appui soit atteinte.
